(19) Europäisches Patentamt
European Patent Office
Office européen des brevets

(11) EP 4 306 712 A1

(12) EUROPEAN PATENT APPLICATION
published in accordance with Art. 153(4) EPC

(43) Date of publication:
**17.01.2024 Bulletin 2024/03**

(21) Application number: **22766761.5**

(22) Date of filing: **16.02.2022**

(51) International Patent Classification (IPC):
***D21H 13/20*** (2006.01) ***D01F 6/76*** (2006.01)
***D04H 1/4326*** (2012.01) ***D21H 27/00*** (2006.01)

(52) Cooperative Patent Classification (CPC):
**D01F 6/76; D04H 1/4326; D21H 13/20;**
**D21H 27/00;** Y02E 60/10; Y02E 60/50

(86) International application number:
**PCT/JP2022/006161**

(87) International publication number:
**WO 2022/190797 (15.09.2022 Gazette 2022/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.03.2021 JP 2021038013**

(71) Applicant: **Toray Industries, Inc.**
**Tokyo 103-8666 (JP)**

(72) Inventors:
- **TSUCHIYA, Shohei**
  **Mishima-shi, Shizuoka 411-8652 (JP)**
- **KATSUTA, Hiroo**
  **Mishima-shi, Shizuoka 411-8652 (JP)**
- **FUNATSU, Yoshitsugu**
  **Okazaki-shi, Aichi 444-8522 (JP)**
- **HARADA, Masaru**
  **Otsu-shi, Shiga 520-2141 (JP)**
- **MIYAKE, Masaya**
  **Otsu-shi, Shiga 520-2141 (JP)**

(74) Representative: **Kador & Partner Part mbB**
**Corneliusstraße 15**
**80469 München (DE)**

# (54) POLYPHENYLENE SULFIDE FIBER NONWOVEN FABRIC, AND DIAPHRAGM COMPRISING SAME

(57) This polyphenylene sulfide fiber nonwoven fabric comprises a polyphenylene sulfide fiber (A), a copolymerized polyphenylene sulfide fiber (B), and a polyphenylene sulfide fusion-bonding portion (C). Among melt endotherm peaks of the nonwoven fabric obtained by increasing the temperature of same at 16°C/min from 50°C in a nitrogen atmosphere by using a differential scanning calorimeter (DSC), a melting point (Tm-L) which is defined as the peak top of a peak observed on the lowest temperature side is 240-270°C.

Provided is a polyphenylene sulfide fiber nonwoven fabric that has both high tear strength and tensile strength even when having a low per-area-weight.

EP 4 306 712 A1

## Description

### TECHNICAL FIELD

The present invention relates to a polyphenylene sulfide fiber nonwoven fabric and a diaphragm including the same.

### BACKGROUND ART

Polyphenylene sulfide, which has excellent mechanical properties and molding processability as well as high heat resistance, chemical resistance, electrical insulation, and flame retardancy, is widely used as a metal alternative material and a material that can withstand extreme environments. Polyphenylene sulfide fibers are also used for applications such as bag filters, papermaking canvases, electrically insulating papers, battery separators, and various diaphragms, taking advantage of these properties. In particular, in a diaphragm for a hydrogen manufacturing device, a diaphragm for a fuel cell, and a reinforcing material for these diaphragms, which are attracting attention as clean energy sources, studies have been made to combine characteristics of polyphenylene sulfide, such as heat resistance and chemical resistance to a high-concentration alkaline solution, and ion permeability and gas separability of a nonwoven fabric material.

A recent problem is thinning of the diaphragm and reduction in the basis weight for the purpose of downsizing and weight reduction as well as high performance of the device. A thin nonwoven fabric having a low basis weight tends to be broken due to minute tension fluctuation during the manufacturing process. Further, such a nonwoven fabric is easily torn due to contact with an edge or a burr of another member in the modularization step. A nonwoven fabric that is excellent in mechanical strength and hardly broken even if it is thin and has a low basis weight is thus required.

To solve this problem, for example, there has been proposed a polyphenylene sulfide wet nonwoven fabric that is formed of a drawn polyphenylene sulfide fiber and an undrawn polyphenylene sulfide fiber as a binder fiber for thermocompression bonding (see, for example, Patent Document 1). The undrawn polyphenylene sulfide fiber is plastically deformed by thermocompression bonding, and the deformed polyphenylene sulfide bond drawn polyphenylene sulfide fibers, whereby a nonwoven fabric excellent in tensile strength is obtained.

There has also been proposed a wet nonwoven fabric formed of a thin binder fiber that is formed by drawing an undrawn polyphenylene sulfide fiber in an ethylene glycol bath at 110°C and that has excellent adhesiveness (see, for example, Patent Document 2). When the nonwoven fabric contains a drawn polyphenylene sulfide fiber which does not involve an increase in the degree of orientation, the resulting nonwoven fabric has excellent tensile strength even when being thin.

On the other hand, undrawn fibers have a problem of being easily thermally shrunk. In light of the above problem, there has also been proposed a wet nonwoven fabric using a copolymerized polyphenylene sulfide fiber having low crystallinity as a papermaking binder (see, for example, Patent Document 3). By containing a copolymerized polyphenylene sulfide fiber having a small diameter and a low thermal shrinkage ratio as a binder, and a polyphenylene sulfide fiber, a thin nonwoven fabric excellent in thermal dimensional stability is obtained.

### PRIOR ART DOCUMENT

### PATENT DOCUMENTS

Patent Document 1: Japanese Patent Laid-open Publication No. 2003-77494
Patent Document 2: Japanese Patent Laid-open Publication No. 2005-146428
Patent Document 3: International Publication No. 2020/066815

### SUMMARY OF THE INVENTION

### PROBLEMS TO BE SOLVED BY THE INVENTION

However, the technique disclosed in Patent Document 1 has a problem that breakage easily occurs due to contact with an edge or a burr of another member in the modularization step. According to the study of the present inventors, undrawn polyphenylene sulfide fibers as a binder fiber are fused during thermal calendering, and the shape of the fiber hardly remains. The present inventors found that the fusion of fibers reduces the tear strength of the nonwoven fabric and thus causes the above breakage.

In addition, the technique disclosed in Patent Document 2 is advantageous for thinning a nonwoven fabric because the nonwoven fabric is formed of a binder fiber alone that has a small diameter and is drawn in an ethylene glycol bath at 110°C. However, similarly to the undrawn polyphenylene sulfide fiber, fibers are fused during thermal calendering, and the shape of the fiber hardly remains, so that the tear strength is not sufficient as described above. In addition, this method has a problem that the nonwoven fabric shrinks in the drying step after papermaking, and dry wrinkles and blisters occur.

On the other hand, in Patent Document 3, the fiber is made of copolymerized polyphenylene sulfide having a low melting point. Thus, the adhesive force between fibers tends to be insufficient, and the tensile strength of the nonwoven fabric tends to decrease.

An object of the present invention is to provide a polyphenylene sulfide fiber nonwoven fabric which is suitable for thinning and reducing the basis weight and has both high tear strength and tensile strength, and a diaphragm containing the same.

SOLUTIONS TO THE PROBLEMS

In order to solve the problems as described above, the present invention has the following configuration.

(1) A polyphenylene sulfide fiber nonwoven fabric containing: a polyphenylene sulfide fiber (A); a copolymerized polyphenylene sulfide fiber (B); and a polyphenylene sulfide fused portion (C), wherein a melting point (Tm-L) of the polyphenylene sulfide fiber nonwoven fabric is 240 to 270°C, the melting point (Tm-L) being defined as a top of a peak observed at a lowest temperature side among melting endothermic peaks obtained by raising a temperature of the polyphenylene sulfide fiber nonwoven fabric from 50°C at a rate of 16°C/min in a nitrogen atmosphere using a differential scanning calorimeter (DSC).

(2) The polyphenylene sulfide fiber nonwoven fabric according to (1), wherein the copolymerized polyphenylene sulfide fiber (B) is a copolymerized polyphenylene sulfide fiber containing repeating units of a p-phenylene sulfide unit and an m-phenylene sulfide unit.

(3) The polyphenylene sulfide fiber nonwoven fabric according to (1) or (2), wherein an area percentage of the polyphenylene sulfide fused portion (C) is 5 to 50%.

(4) The polyphenylene sulfide fiber nonwoven fabric according to any one of (1) to (3), having a tear strength of 0.200 to 10.0 N.

(5) The polyphenylene sulfide fiber nonwoven fabric according to any one of (1) to (4), wherein the copolymerized polyphenylene sulfide fiber (B) contains 4.0 to 40.0 mol% of a copolymerization unit in p-phenylene sulfide.

(6) The polyphenylene sulfide fiber nonwoven fabric according to any one of (1) to (5), wherein mol% of the p-phenylene sulfide unit in the polyphenylene sulfide fused portion (C) is 97.0 mol% or more.

(7) A diaphragm containing the polyphenylene sulfide fiber nonwoven fabric according to any one of (1) to (6).

EFFECTS OF THE INVENTION

According to the present invention, a polyphenylene sulfide fiber nonwoven fabric suitable for thinning and reducing the basis weight can be provided. The present invention can also provide a polyphenylene sulfide fiber nonwoven fabric excellent in tear strength and tensile strength. Further, the present invention can also provide a polyphenylene sulfide fiber nonwoven fabric which hardly causes breakage in the manufacturing process, breakage in subsequent steps, and the like. Accordingly, it is possible to provide a thin diaphragm or a diaphragm having a low basis weight.

EMBODIMENTS OF THE INVENTION

In the polyphenylene sulfide fiber (A) in the present invention, 97.0 mol% or more of the repeating unit is composed of a p-phenylene sulfide unit represented by the following general formula (1). The content of the p-phenylene sulfide unit as the repeating unit is preferably 98.0 mol%, and more preferably 99.0 mol% or more. The polyphenylene sulfide fiber (A), which exhibits high fiber strength, can bear stress through fusion of fibers by the polyphenylene sulfide fused portion (C), so that the resulting nonwoven fabric has high tensile strength. The mass% of the polyphenylene sulfide fiber (A) in the polyphenylene sulfide fiber nonwoven fabric is preferably 1 mass% or more, and more preferably 2 mass% or more from the viewpoint of improving the tensile strength. The mass% of the polyphenylene sulfide fiber (A) is preferably 80 mass% or less, and more preferably 60 mass% or less from the viewpoint of balance with the tear strength. The presence of the polyphenylene sulfide fiber (A) in the present invention can be confirmed by the microscopic infrared spectroscopic analysis described in Examples.

[Chem. 1]

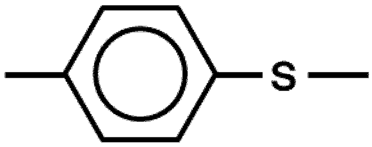

(1)

The copolymerized polyphenylene sulfide fiber (B) in the present invention contains 4.0 mol% or more, preferably 5.0 mol% or more of at least one or more types of copolymerization units in addition to p-phenylene sulfide. In the present invention, by containing the copolymerized polyphenylene sulfide fiber (B), the tear strength can be improved. The content of the copolymerization unit is preferably 40.0 mol% or less, and more preferably 30.0 mol% or less from the viewpoint of mechanical characteristics. Non-limiting examples of the copolymerization unit other than p-phenylene sulfide include aromatic sulfides such as triphenylene sulfide and biphenylene sulfide, or alkylsubstituted derivatives and halogen-substituted derivatives thereof. The copolymerization unit is preferably m-phenylene sulfide represented by the following general formula (2). When m-phenylene sulfide is contained as a copolymerization unit, the melting point and/or crystallinity of the polyphenylene sulfide is lowered without impairing characteristics such as heat resistance and chemical resistance of the polyphenylene sulfide. Therefore, development of cracks at the time of tear can be more effectively suppressed. The mass% of the polyphenylene sulfide fiber (B) in the polyphenylene sulfide fiber nonwoven fabric is preferably 1 mass% or more, and more preferably 2 mass% or more from the viewpoint of improving the tensile strength. The mass% of the polyphenylene sulfide fiber (A) is preferably 80 mass% or less, and more preferably 60 mass% or less from the viewpoint of balance with the tear strength. In the present invention, the presence of the copolymerized polyphenylene sulfide fiber (B) containing m-phenylene sulfide in the nonwoven fabric can be confirmed by the microscopic infrared spectroscopic analysis described in Examples.

[Chem. 2]

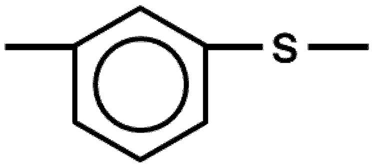

(2)

In the present invention, the copolymerized polyphenylene sulfide fiber (B) preferably contains 60.0 mol% or more and 96.0 mol% or less of p-phenylene sulfide units in the repeating unit. By setting the content of the p-phenylene sulfide unit in the repeating unit to preferably 60.0 mol% or more, and more preferably 70.0 mol% or more, the polyphenylene sulfide fiber has good spinnability and excellent heat resistance and mechanical characteristics. In addition, by setting the content of the p-phenylene sulfide unit to preferably 96.0 mol% or less, and more preferably 95.0 mol% or less, the copolymerized polyphenylene sulfide lowers the crystallinity to be formed into a copolymerized polyphenylene sulfide fiber contributing to further improvement in tear strength. The content of the m-phenylene sulfide unit as a preferable copolymerization component is preferably 4.0 mol% or more and 40.0 mol% or less of the repeating unit. By setting the content of the m-phenylene sulfide unit to more preferably 5.0 mol% or more, and still more preferably 6.0 mol% or more, the copolymerized polyphenylene sulfide lowers the melting point and crystallinity to be formed into a copolymerized polyphenylene sulfide fiber (B) having the above excellent crack development suppressing effect at the time of tear. By setting the content of the m-phenylene sulfide unit to preferably 40.0 mol% or less, and more preferably 30.0 mol% or less, an excessive decrease in melting point and crystallinity of the copolymerized polyphenylene sulfide is suppressed. Thus, the resulting copolymerized polyphenylene sulfide fiber (B) has good heat resistance and mechanical characteristics. As the mole% of the p-phenylene sulfide unit and the m-phenylene sulfide unit of the copolymerized polyphenylene sulfide fiber (B) in the present invention, a value obtained by the microscopic infrared spectroscopic analysis described in Examples is used.

In the present invention, when the nonwoven fabric contains the copolymerized polyphenylene sulfide fiber (B), low crystalline elements that are easily deformed can be anisotropically interspersed. As a result, development of cracks associated with tear is suppressed, so that the resulting nonwoven fabric has high tear strength.

The cross-sectional shapes of the polyphenylene sulfide fiber (A) and the copolymerized polyphenylene sulfide fiber (B) according to the present invention are never limited, and can be formed in any shape such as a round cross-section, a multilobar cross-section (e.g., a triangular cross-section), a flattened cross-section, an S-shaped cross-section, a cross-shaped cross-section, or a hollow cross-section. When a papermaking method, which is a preferred method for

manufacturing the polyphenylene sulfide fiber nonwoven fabric of the present invention, is employed, a round cross-section is preferred from the viewpoint of the dispersibility of fibers at the time of papermaking, and the like.

In the polyphenylene sulfide fiber nonwoven fabric of the present invention, the copolymerized polyphenylene sulfide fiber (B) is preferably partially fused as long as the effect of the present invention is not impaired. For example, when a part of the surface of the copolymerized polyphenylene sulfide fiber (B) is fused by thermal calendering or the like to exhibit fusibility with surrounding fibers while keeping its fiber shape, the bonding area between constituent fibers increases, and this can also contribute to reduction in slipping out of fibers.

Conventionally, the copolymerized polyphenylene sulfide fiber (B), which has a low melting point, has been used as a binder fiber. However, as described above, when the copolymerized polyphenylene sulfide fiber (B) is used, it is difficult to attain high tensile strength due to insufficient adhesive strength. In the present invention, the nonwoven fabric contains a polyphenylene sulfide fused portion (C) as a binder.

In the present invention, in order to form a strong adhesive portion, the content of the p-phenylene sulfide unit in the polyphenylene sulfide fused portion (C) is preferably 97.0 mol% or more, more preferably 98.0 mol% or more, and still more preferably 99.0 mol% or more. By increasing the content of the p-phenylene sulfide unit, the strength of the polyphenylene sulfide fused portion (C) can be increased, and breakage hardly occurs when tensile stress is applied. As a result, the bonded constituent fiber bundle hardly slips out. In the present invention, as the mol% of the p-phenylene sulfide unit in the polyphenylene sulfide fused portion (C), a value determined by the microscopic infrared spectroscopic analysis described in Examples is used.

The polyphenylene sulfide fused portion (C) in the present invention preferably has a shape in which at least a part of polyphenylene sulfide is turned into a film. Here, the fused portion refers to, for example, a portion where a binder fiber used as a precursor loses its shape and turns into an amorphous shape to bond fibers constituting the nonwoven fabric. When the nonwoven fabric contains the polyphenylene sulfide fused portion (C), the fibers contained in the nonwoven fabric of the present invention are bonded to each other by polyphenylene sulfide. By this slipping out of fibers is difficult to occur when a tensile stress is applied to the nonwoven fabric.

The area percentage of the polyphenylene sulfide fused portion (C) in the polyphenylene sulfide fiber nonwoven fabric of the present invention is preferably 5 to 50%. By setting the area percentage of the polyphenylene sulfide fused portion (C) to preferably 5% or more, and more preferably 10% or more, the bonding area between the constituent fibers can be increased to improve the strength. As a result, even when a tensile stress is applied to the nonwoven fabric during the process, slipping out of the constituent fibers can be difficult to occur. By setting the area percentage of the polyphenylene sulfide fused portion (C) to preferably 50% or less, and more preferably 40% or less, the polyphenylene sulfide fiber (A) and the copolymerized polyphenylene sulfide fiber (B), which exhibit excellent tensile strength in the nonwoven fabric, are sufficiently present, and the resulting nonwoven fabric has high tensile strength. Further, setting the above area percentage allows the nonwoven fabric to maintain flexibility and air permeability which are characteristics of the nonwoven fabric. As the area percentage of the polyphenylene sulfide fused portion (C) in the present invention, a value measured by the microscopic infrared spectroscopic analysis of the surface of the nonwoven fabric according to the method described in Examples is used.

In the polyphenylene sulfide fiber nonwoven fabric of the present invention, the type of the nonwoven fabric is not particularly limited. Examples of the nonwoven fabric include a spunbond nonwoven fabric, a meltblown nonwoven fabric, a spunlace nonwoven fabric, a needle punch nonwoven fabric, and a wet nonwoven fabric. Among these nonwoven fabrics, a wet nonwoven fabric is preferable from the viewpoint of ease in production of a thin nonwoven fabric having a low basis weight.

The melting point (Tm-L) of the polyphenylene sulfide fiber nonwoven fabric of the present invention is 240 to 270°C. The melting point is defined as the top of a peak observed on the lowest temperature side among melting endothermic peaks of the nonwoven fabric obtained by raising the temperature of the nonwoven fabric from 50°C at a rate of 16°C/min in a nitrogen atmosphere, using a differential scanning calorimeter (DSC). By setting the melting point (Tm-L) to 270°C or lower, preferably 265°C or lower, and more preferably 260°C or lower, the copolymerized polyphenylene sulfide fiber (B) is not completely fused in the nonwoven fabric during thermal calendering, to suppress a decrease in tear strength. By setting the melting point (Tm-L) to 240°C or higher, preferably 243°C or higher, and more preferably 245°C or higher, the copolymerized polyphenylene sulfide fiber can be partially fused to thereby suppress slipping out of fibers and improve heat resistance. Setting the above melting point can also prevents the fibers from being completely fused and losing their fiber forms during thermal calendering. As the melting point (Tm-L) of the polyphenylene sulfide fiber nonwoven fabric, a value measured by the method described in Examples is used.

The basis weight of the polyphenylene sulfide fiber nonwoven fabric of the present invention is preferably 1.00 to 100 g/m$^2$. By setting the basis weight to preferably 1.00 g/m$^2$ or more, more preferably 3.00 g/m$^2$ or more, and still more preferably 5.00 g/m$^2$ or more, breakage hardly occurs during the manufacturing process to improve the processability. By setting the basis weight to preferably 100 g/m$^2$ or less, more preferably 80.0 g/m$^2$ or less, and still more preferably 60.0 g/m$^2$ or less, the resulting nonwoven fabric is lightweight and has excellent flexibility. In addition, setting the above basis weight can also yield a thin diaphragm having a low basis weight. The basis weight of the nonwoven

fabric in the present invention refers to a value measured by the method described in Examples.

The thickness of the polyphenylene sulfide fiber nonwoven fabric of the present invention is preferably 5.00 to 300.00 um. By setting the thickness to preferably 5.00 um or more, more preferably 8.00 um or more, and still more preferably 10.00 um or more, breakage hardly occurs during the manufacturing process, and the processability is improved. In addition, by setting the thickness to preferably 300.00 um or less, more preferably 250.00 um or less, and still more preferably 200.00 um or less, the permeability of ions and the like when the nonwoven fabric is used as a diaphragm or the like is improved. In addition, when the nonwoven fabric is mounted on a device as a diaphragm or the like, the occupied volume of the nonwoven fabric is reduced, so that the device can be reduced in size and weight. The thickness of the nonwoven fabric in the present invention refers to a value measured by the method described in Examples.

The tear strength of the polyphenylene sulfide fiber nonwoven fabric of the present invention is preferably 0.200 to 10.0 N. By setting the tear strength to preferably 0.200 N or more, more preferably 0.250 N or more, and still more preferably 0.350 N or more, even when cracking occurs in the nonwoven fabric during the process, the cracking is less likely to propagate throughout the nonwoven fabric, and the nonwoven fabric is less likely to be broken. In addition, by setting the tear strength to preferably 10.0 N or less, more preferably 7.50 N or less, and still more preferably 5.00 N or less, problems are less likely to occur at the time of cutting the nonwoven fabric. The tear strength can be improved by, for example, increasing the proportion of the copolymerized polyphenylene sulfide fiber (B). The tear strength of the nonwoven fabric in the present invention refers to a value measured by the method described in Examples.

The tensile strength of the polyphenylene sulfide fiber nonwoven fabric of the present invention is preferably 2.5 to 300.0 N/15 mm. By setting the tensile strength to preferably 2.5 N/15 mm or more, more preferably 3.5 N/15 mm or more, and still more preferably 5.0 N/15 mm or more, breakage during the manufacturing process hardly occurs. In addition, even when tensile stress is applied during subsequent steps or during use, the nonwoven fabric is less likely to be broken. In addition, by setting the tensile strength to preferably 300.0 N/15 mm or less, more preferably 250.0 N/15 mm or less, and still more preferably 200.0 N/15 mm or less, the flexibility of the nonwoven fabric can be maintained, and the resulting nonwoven fabric has excellent assemblability when used for a diaphragm or the like. The polyphenylene sulfide fibers (A) having high fiber strength are firmly bonded by the polyphenylene sulfide fused portion (C) to improve the tensile strength. That is, when the nonwoven fabric contains the polyphenylene sulfide fiber (A) and the polyphenylene sulfide fused portion (C), fibers are less likely to slip out, and the polyphenylene sulfide fiber (A) bears stress. Thus, the resulting nonwoven fabric exhibits high tensile strength due to the above effects. The tensile strength of the nonwoven fabric in the present invention refers to a value measured by the method described in Examples.

In the polyphenylene sulfide fiber nonwoven fabric of the present invention, the square root (VXY) of the product of the tear strength of X (N) and the tensile strength of Y (N/15 mm) is preferably 1.4 or more. By setting the square root VXY to preferably 1.4 or more, more preferably 1.5 or more, and still more preferably 1.6 or more, breakage or the like in the manufacturing process can be suppressed. In addition, when the preferable ranges of the tear strength and the tensile strength are achieved, it is more preferable because the resulting nonwoven fabric is hardly broken even when being pressed against a module in a state where a tensile stress is applied at the time of mounting the nonwoven fabric as a diaphragm or the like on a device.

In the present invention, unlike a case where the nonwoven fabric contains only the polyphenylene sulfide fiber (A) and the polyphenylene sulfide fused portion (C) or only the polyphenylene sulfide fiber (A) and the copolymerized polyphenylene sulfide fiber (B), inclusion of all of the polyphenylene sulfide fiber (A), the copolymerized polyphenylene sulfide fiber (B), and the polyphenylene sulfide fused portion (C) ensures both the above preferable tensile strength and tear strength. In addition, in order to achieve both the tensile strength and tear strength in a well-balanced manner, the mass ratio (A/B) of the polyphenylene sulfide fiber (A) and the copolymerized polyphenylene sulfide fiber (B) is preferably 0.01 or more, more preferably 0.1 or more, and still more preferably 0.5 or more. The mass ratio is preferably 50 or less, more preferably 25 or less, and still more preferably 2 or less.

The air permeability of the polyphenylene sulfide fiber nonwoven fabric of the present invention is preferably 1 to 150 $cc/cm^2/s$. By setting the air permeability to preferably 1 $cc/cm^2/s$ or more, more preferably 3 $cc/cm^2/s$ or more, and still more preferably 5 $cc/cm^2/s$ or more, the permeability of ions and the like when the nonwoven fabric is used for a diaphragm or the like is improved. In addition, by setting the air permeability to preferably 150 $cc/cm^2/s$ or less, more preferably 120 $cc/cm^2/s$ or less, and still more preferably 100 $cc/cm^2/s$ or less, the nonwoven fabric has sufficient mechanical strength. As a result, breakage during the manufacturing process is less likely to occur, and the processability is improved. When a nonwoven fabric having the above air permeability is used for a diaphragm or the like, breakage or cracking during assembly hardly occurs. The air permeability of the nonwoven fabric in the present invention refers to a value measured by the method described in Examples.

The diaphragm of the present invention contains the polyphenylene sulfide fiber nonwoven fabric of the present invention described above. Here, the diaphragm is not particularly limited, but plays a role of ion permeation and gas separation in, for example, a hydrogen manufacturing device, a fuel cell, and the like. The polyphenylene sulfide fiber nonwoven fabric of the present invention is excellent in mechanical strength even when it is a thin nonwoven fabric having a low basis weight. Therefore, the polyphenylene sulfide fiber nonwoven fabric is formed into a diaphragm that

is excellent in ion permeation efficiency and is hardly broken during mounting and during use. As an example of the diaphragm of the present invention, there is a diaphragm obtained by laminating the polyphenylene sulfide fiber nonwoven fabric of the present invention and other materials such as a porous film. The polyphenylene sulfide fiber nonwoven fabric of the present invention contains the copolymerized polyphenylene sulfide fiber (B) having a low melting point. Therefore, inclusion of the copolymerized polyphenylene sulfide fiber (B) yields a high-performance diaphragm which is excellent in heat fusibility with other materials, and hardly causes layer peeling or deterioration of ion permeation efficiency between layers.

A preferred example of the method for manufacturing a polyphenylene sulfide fiber nonwoven fabric of the present invention and a diaphragm containing the same is as follows. First, a papermaking stock solution obtained by dispersing the polyphenylene sulfide fiber (A), the copolymerized polyphenylene sulfide fiber (B), and a precursor of the polyphenylene sulfide fused portion (C) in water is prepared, followed by papermaking and drying. Next, the fibers are thermally fused by the precursor of the polyphenylene sulfide fused portion (C) through thermal calendering or the like to form the polyphenylene sulfide fused portion (C). In the present invention, the polyphenylene sulfide fused portion (C) can be formed by using, preferably, an undrawn polyphenylene sulfide fiber as a precursor thereof and fusing the undrawn polyphenylene sulfide fiber by thermal calendering or the like.

Hereinafter, a method for manufacturing a polyphenylene sulfide fiber nonwoven fabric and a diaphragm produced using the polyphenylene sulfide fiber (A), the copolymerized polyphenylene sulfide fiber (B), and the undrawn polyphenylene sulfide fiber, which are preferably used in the present invention, will be specifically described using a wet nonwoven fabric as an example.

[Method for manufacturing polyphenylene sulfide fiber (A)]

For the purpose of preventing incorporation of moisture or removal of an oligomer, the polyphenylene sulfide to be used is preferably dried before subjected to melt spinning, to increase yarn-making capabilities. The drying conditions generally used are vacuum drying at 100 to 200°C for 1 to 24 hours.

In the melt spinning, a melt-spinning technique using, for example, a pressure melter-type extruder or a single screw or twin screw extruder can be employed. The extruded polyphenylene sulfide goes through a pipe, is weighed by weighing equipment such as a gear pump, passes through a filter for removing foreign matter, and then is guided to a spinneret. At this time, the temperature (spinning temperature) from the polymer pipe to the spinneret is preferably 280°C or higher in order to increase the flowability of the copolymerized polyphenylene sulfide, and is preferably set at 380°C or lower in order to suppress pyrolysis of the polymer.

When the polyphenylene sulfide fiber to be used in the present invention is a composite fiber, polyphenylene sulfide and the other component resin are separately melted, each weighed by known weighing equipment such as a gear pump via a polymer pipe, pass through a filter for removing foreign matter, and then are guided to a spinneret. Respective polymers guided to the spinneret are combined and formed into a composite form while the shape thereof is regulated in the spinneret, and then discharged from a spinneret hole as a composite fiber.

The spinneret used for discharge has a spinneret hole preferably having a hole diameter D of 0.1 mm or more and 0.6 mm or less. A ratio L/D that is defined by a quotient obtained by dividing a land length L (the length of a straight pipe identical with the hole diameter of the spinneret hole) of the spinneret hole by the hole diameter D is 1 or more and 10 or less.

A polyphenylene sulfide fiber discharged from the spinneret hole is subjected to a cooling blast (air), and thus cooled and solidified. The temperature of the cooling blast can be determined according to the balance with the speed of the cooling blast, from the viewpoint of cooling efficiency. In a preferred aspect, however, the temperature is 30°C or lower. By setting the temperature of the cooling blast at preferably 30°C or lower, the polyphenylene sulfide fiber has a stable solidification behavior by cooling and has high fiber-diameter uniformity.

The cooling blast is preferably flown perpendicular to the undrawn fiber discharged from the spinneret. In the blast cooling, the speed of the cooling blast is preferably 10 m/min or more from the viewpoint of cooling efficiency and fineness uniformity, and is preferably 100 m/min or less from the viewpoint of yarn-making stability.

The cooled and solidified undrawn fiber is taken up by a roller (godet roller) rotating at a constant speed. The take-up speed is preferably 300 m/min or more in order to improve linear uniformity and productivity, and is preferably 2,000 m/min or less in order not to generate yarn breakage.

The undrawn fiber thus obtained is once wound up, or taken up and then continuously subjected to a drawing step. Drawing is performed by a heated first roller, or a heating device disposed between a first roller and a second roller, for example, by allowing the undrawn fiber to run in a heating bath or on a hot plate. The drawing conditions are determined according to the mechanical properties of the obtained undrawn fiber. The drawing temperature is determined by the temperature of the heated first roller or the heating device disposed between the first roller and the second roller. The draw ratio is determined by the ratio between the peripheral speeds of the first roller and the second roller.

The temperature of the heated first roller or the heating device in the drawing step is preferably set at 80°C or

higher and 130°C or lower. By setting the temperature at 80°C or higher, the drawing point is fixed to enable stable drawing, and by setting the temperature at 130°C or lower, the polyphenylene sulfide fiber can suppress yarn breakage to improve the processability. The temperature of the second roller is preferably set at 20°C or less higher than the temperature of the heated first roller or the heating device, from the viewpoint of fixing the drawing point.

Further, after passing the second roller, the drawn fiber may be heated and heat-set by a heated third roller or a heating device disposed between the second roller and a third roller. The heat setting temperature in the case of heat setting is preferably 180 to 240°C. By setting the heat setting temperature to 180°C or higher, the shrinkage ratio can be reduced by thermal crystallization. This makes it possible to suppress width shrinkage of the nonwoven fabric in the manufacturing process of the nonwoven fabric, and to provide a nonwoven fabric excellent in dimensional stability. In addition, by setting the heat setting temperature to 240°C or lower, fusion of fibers to the roller can be suppressed to prevent deterioration of the processability.

It is preferable to apply a papermaking dispersant or the like to the obtained fiber as necessary. The dispersant is usually applied in a tow state by a kiss roll or guide lubrication. The attachment rate of the papermaking dispersant is preferably 1 to 6 mass% relative to the mass of the fiber. By setting the attachment rate of the dispersant to preferably 1 mass% or more, and more preferably 2 mass% or more, the fibers in the dispersion, which are a precursor of the nonwoven fabric, improve their dispersibility to be formed into a uniform nonwoven fabric. Further, by setting the attachment rate of the dispersant at preferably 6 mass% or less, and more preferably 5 mass% or less, the processability during processing of the nonwoven fabric is improved.

Next, the obtained fiber may be subjected to crimping by a crimper and heat setting by a heat setter. By imparting the crimp, fibers are entangled with each other to increase the bonding area between the fibers, and thus a nonwoven fabric excellent in mechanical strength can be obtained.

The number of crimps in the crimping is preferably 2 to 15 crimps/25 mm. By setting the number of crimps to preferably 2 crimps/25 mm or more, fibers are easily entangled with each other to be formed into a nonwoven fabric excellent in mechanical strength. By setting the number of crimps to preferably 15 crimps/25 mm or less, the fibers improve their dispersibility in the dispersion to be formed into a uniform nonwoven fabric.

The heat setting temperature of the heat setter is preferably 80 to 100°C. By setting the heat setting temperature to preferably 80°C or higher, the crimped form can be fixed, and by setting the heat setting temperature to preferably 100°C or lower, shrinkage of the fiber can be suppressed.

Then, the obtained fiber is cut into a predetermined length with a cutter to obtain a cut fiber. The fiber length of the cut fiber is preferably 0.5 to 15 mm. By setting the fiber length to preferably 0.5 mm or more, fibers are easily entangled with each other to be formed into a nonwoven fabric excellent in mechanical strength. In addition, by setting the fiber length to preferably 15 mm or less, it is possible to prevent the occurrence of unevenness and the like due to entangled fibers in the dispersion forming lumps and the like.

[Method for manufacturing copolymerized polyphenylene sulfide fiber (B)]

An undrawn fiber can be obtained in the same manner as the polyphenylene sulfide fiber (A) except that copolymerized polyphenylene sulfide is used as a raw material polymer.

After the obtained undrawn fiber is drawn, the fiber needs not be subjected to heat setting for the purpose of exhibiting high adhesiveness, but when heat setting is performed, the heat setting temperature is preferably 210°C or lower. By setting the heat setting temperature to preferably 210°C or lower, more preferably 190°C or lower, and still more preferably 150°C or lower, the copolymerized polyphenylene sulfide suppresses excessive thermal crystallization to be formed into a copolymerized polyphenylene sulfide fiber having high adhesiveness.

The cut fiber of the obtained fiber can be obtained in the same manner as the polyphenylene sulfide fiber (A).

[Method for manufacturing undrawn polyphenylene sulfide fiber]

A cut fiber of an undrawn fiber can be obtained in the same manner as the method for manufacturing the polyphenylene sulfide fiber (A) except that drawing and heat setting are not performed. The raw material polymer may be the same as long as it is in the range of the components described above.

[Method for manufacturing polyphenylene sulfide fiber nonwoven fabric]

Each of the three types of cut fibers obtained by the above method is dispersed in water. Further, these dispersions are mixed at a desired proportion to obtain a papermaking dispersion. The melting point (Tm-L) in the present invention can be adjusted by the melting point of the copolymerized polyphenylene sulfide fiber (B) constituting the nonwoven fabric. The melting point of the copolymerized polyphenylene sulfide fiber (B) can be usually lowered by increasing the copolymerization ratio, and can be raised by decreasing the copolymerization ratio.

The total amount of the three types of cut fibers relative to the total mass of the papermaking dispersion is preferably 0.05 to 5 mass%. By setting the total amount to 0.05 mass% or more, the production efficiency can be improved, and the load of the dewatering step can be reduced. By setting the total amount to 5 mass% or less, the dispersion state of the fibers is improved, and thus a uniform wet nonwoven fabric can be obtained.

As the dispersion, dispersions of three types of cut fibers may be separately prepared in advance and then mixed, or a dispersion containing three types of cut fibers may be directly prepared. The method in which dispersions of the respective fibers are prepared separately and then mixed together is preferable from the viewpoint that the stirring time can be separately controlled according to the shape and properties of each fiber, and the method in which a dispersion containing three types of cut fibers is directly prepared is preferable from the viewpoint of process simplification.

Dispersants and oils composed of cationic, anionic, and nonionic surfactants and the like for improving water dispersibility, a viscosity agent which increases the viscosity of the dispersion and prevents aggregation of the papermaking dispersion, and an antifoaming agent which suppresses the generation of bubbles may be added to the papermaking dispersion.

The papermaking dispersion prepared as described above is subjected to papermaking using a paper machine such as a cylinder net paper machine, a long net paper machine, or a tilted net paper machine or a handmade paper machine, and this is dried using a Yankee dryer, a rotary dryer or the like to obtain a dry web. Thereafter, the dry web is subjected to a heating and pressurization treatment to obtain a nonwoven fabric. Incidentally, in the present invention, to simultaneously perform heating and pressurization is referred to as a heating and pressurization treatment, and this is distinguished from a treatment in which only heating such as drying is performed but pressurization is not performed. The dry web refers to a nonwoven fabric which has been subjected to wet papermaking but has not been subjected to a heating and pressurization treatment.

In a preferred method for manufacturing the polyphenylene sulfide fiber nonwoven fabric of the present invention, the polyphenylene sulfide fused portion (C) is preferably manufactured by subjecting the above undrawn polyphenylene sulfide fiber to a heating and pressurization treatment, or the like from the viewpoint of simplicity and low cost. In this case, it is preferable to suppress crystallization during the manufacturing process of the dry web as much as possible. For this purpose, the drying temperature in the papermaking step is set to preferably 80°C to 150°C and more preferably 90°C to 140°C. Moreover, it is also preferable to suppress crystallization by shortening the passage time in the drying step. When the drying is insufficiently performed, the paper strength of the dry web decreases, and further, a sudden thermal shrinkage occurs at the time of the heating and pressurization treatment in the next step and paper breakage is likely to occur. On the other hand, when the drying is excessively performed, crystallization of the dry web proceeds, and the undrawn polyphenylene sulfide fiber is hardly plastically deformed at the time of the heating and pressurization treatment in the next step. As a result, a sufficient amount of the polyphenylene sulfide fused portion (C) is not formed, and the mechanical characteristics of the obtained nonwoven fabric are deteriorated. Here, the drying temperature in the papermaking step refers to the highest treatment temperature (atmospheric temperature) at the time of drying in the papermaking step.

In the manufacturing of the nonwoven fabric of the present invention, it is preferable to subject a dry web obtained by mixing three types of cut fibers to a heating and pressurization treatment. By performing the heating and pressurization treatment, as described above, the undrawn polyphenylene sulfide fiber can be melted and softened to form the polyphenylene sulfide fused portion (C). The means for heating and pressurization may be any means but, for example, a hot press using a flat plate and the like and thermal calendering can be employed. Among these, thermal calendering which can continuously process the dry web is preferable. As the roll of the thermal calendering, a metal-metal roll, a metal-paper roll, a metal-rubber roll and the like can be used.

The temperature condition for the heating and pressurization treatment is preferably a temperature which is equal to or higher than the glass transition temperature of the undrawn polyphenylene sulfide fiber and equal to or lower than the melting point of the copolymerized polyphenylene sulfide fiber (B). For this purpose, the heating temperature is preferably set to 150 to 240°C. By setting the heating temperature to preferably 150°C or higher, the undrawn polyphenylene sulfide fiber is melted and softened to form the polyphenylene sulfide fused portion (C), and the resulting nonwoven fabric has excellent mechanical characteristics. By setting the heating temperature to preferably 240°C or lower, the copolymerized polyphenylene sulfide fiber (B) having a low melting point can be prevented from being completely fused and losing its fiber shape. Further, setting the above heating temperature prevents fibers from being fused to a heating device such as a thermal calendering device, and thus prevents deterioration of the processability.

The pressure is preferably 98 to 7,000 N/cm in a case in which calendering is employed as the heating and pressurization treatment. By setting the pressure to preferably 98 N/cm or more, the polyphenylene sulfide fused portion (C) can be formed, and the resulting nonwoven fabric has excellent mechanical characteristics. On the other hand, it is possible to prevent breakage of the nonwoven fabric in the heating and pressurization treatment step and to stably perform the treatment by setting the pressure to preferably 7,000 N/cm or less. The processing speed is preferably 1 to 30 m/min. By setting the processing speed to preferably 1 m/min or more and more preferably 2 m/min, good work efficiency can be obtained. On the other hand, by setting the processing speed to preferably 30 m/min or less, and more

preferably 20 m/min or less, heat can also be conducted to the fibers inside the nonwoven fabric, and a practical effect of thermal fusion of the fibers can be attained.

The diaphragm of the present invention can be manufactured by laminating other materials such as a porous film as necessary, although the polyphenylene sulfide fiber nonwoven fabric of the present invention described above can be used as it is. In the case of laminating materials, it is preferable to perform thermal fusion bonding by thermal calendering or the like. By setting the heating temperature at the time of thermal calendering to 220°C or lower, the fiber forms of the polyphenylene sulfide fiber (A) and the copolymerized polyphenylene sulfide fiber (B) in the polyphenylene sulfide fiber nonwoven fabric of the present invention are not impaired. Thus, the resulting diaphragm has both high tear strength and high tensile strength.

EXAMPLES

Hereinafter, the polyphenylene sulfide fiber nonwoven fabric according to the present invention is more specifically described by way of examples. However, the present invention is not limited only to these Examples. Various modifications and corrections can be made without departing from the technical scope of the present invention. The values of the characteristics in the examples were obtained by the following methods.

[Measurement and evaluation methods]

(1) Measurement of area percentage of polyphenylene sulfide fused portion (C) and mole% of repeating unit:

The surface of a nonwoven fabric sheet after the heating and pressurization treatment was imaged at a magnification of 150 times in an imaging mode using a microinfrared spectrophotometer ("Cary 660" manufactured by Agilent Technologies, Inc.). The obtained image was subjected to image processing software "imageJ", and an area percentage of a portion where fibers lose their shape and turn into a film in a region including polyphenylene sulfide was calculated. Note that the portion where fibers lose their shape and turn into a film was manually selected in the dynamic contour extraction processing mode. This procedure was carried out at freely selected three positions on the surface of the nonwoven fabric, and the obtained average value was taken as the area percentage of the polyphenylene sulfide fused portion (C). The mole% of the repeating unit of the polyphenylene sulfide fused portion (C) was calculated using a calibration curve obtained from each peak intensity of a standard sample known in mole%, from the peak intensity derived from the C-H out-of-plane bending of the para-substituted form of benzene in the vicinity of 810 $cm^{-1}$ of the infrared absorption spectrum in a portion where fibers lose their shape and turn into a film in a region including polyphenylene sulfide obtained at a magnification of 150 times as described above.

(2) Melting point of copolymerized polyphenylene sulfide fiber (B):

The melting point of the copolymerized polyphenylene sulfide fiber (B) was obtained by raising the temperature of a cut fiber of the obtained copolymerized polyphenylene sulfide fiber (B) from 50°C to 320°C at a rate of 16°C/min by a DSC ("Q1000" manufactured by TA Instruments Inc.), and measuring the temperature at the top of a melting peak (endothermic peak) observed at a temperature of 200°C or higher in the obtained DSC curve. The measurement was performed three times per sample, and the arithmetic average value of the measurements was obtained.

(3) Melting point (Tm-L) of polyphenylene sulfide fiber nonwoven fabric:

The melting point of the polyphenylene sulfide fiber nonwoven fabric was obtained by raising the temperature of a nonwoven fabric from 50°C to 320°C at a rate of 16°C/min by a DSC ("Q1000" manufactured by TA Instruments Inc.), and measuring the temperature at the top of a peak observed on the lowest temperature side among the melting peaks (endothermic peaks) observed at a temperature of 200°C or higher in the obtained DSC curve. The measurement was performed three times per sample, and the arithmetic average value of the measurements was obtained.

(4) Basis weight:

In conformity with "mass per unit area" specified in JIS L1913 (2010), three test pieces having a size of 10 cm × 10 cm were collected, the mass (g) of each test piece in the standard state was weighed, and the average value thereof was expressed as the mass per 1 $m^2$ (g/$m^2$).

(5) Thickness:

In conformity with "thickness: method A" specified in JIS P8118 (2014), twenty test pieces having a size of 10 cm × 10 cm were collected, the thickness of each test piece was measured one by one using a micrometer (manufactured by Mitutoyo Corporation), and the arithmetic average value thereof was expressed as the thickness (μm) of the nonwoven fabric.

(6) Tear strength:

In conformity with "tear strength: method D (pendulum method)" specified in JIS L1096 (2010), a test piece having a size of 63 mm × 100 mm was measured in each of the longitudinal direction (traveling direction in the manufacturing process of the nonwoven fabric) and the transverse direction (width direction in the manufacturing process of the nonwoven fabric) of the nonwoven fabric. Using an Elmendorf type tearing resistance tester (manufactured by Yasuda Seiki Seisakusho, Ltd.), a 20 mm cut was made at a right angle at the center of both grips of the test piece. Then, a strength at which the remaining portion of 43 mm was torn in the longitudinal direction and the transverse direction was measured. The tear strength (N) of the nonwoven fabric was determined by measuring five times in each of the longitudinal direction and the transverse direction per sample, and calculating the arithmetic average value of the measurements.

(7) Tensile strength:

In conformity with "tensile strength and elongation (standard test)" specified in JIS L1913 (2010), the tensile strength was measured in each of the longitudinal direction (the traveling direction in the manufacturing process of the nonwoven fabric) and the transverse direction (the width direction in the manufacturing process of the nonwoven fabric) of the nonwoven fabric. Using Tensilon ("UTM-III-100" manufactured by Orientec Co., Ltd.), the maximum point load was measured under conditions of a sample width of 15 mm, an initial length of 20 mm, and a tensile speed of 20 mm/min. The tensile strength (N/15 mm) of the nonwoven fabric was determined by measuring the nonwoven fabric five times in each of the longitudinal direction and the transverse direction per sample, and calculating the arithmetic average value of the measurements.

(8) Air permeability:

In conformity with "air permeability: Frazier method" specified in JIS L1913 (2010), three test pieces having a size of 15 cm × 15 cm were collected, the air permeability of each of the three test pieces was measured at a test pressure of 125 Pa using an air permeability tester ("FX3300" manufactured by TEXTEST AG), and the arithmetic average value thereof was expressed as the air permeability ($cm^3/cm^2/s$).

(9) Confirmation of presence of polyphenylene sulfide fiber (A) and copolymerized polyphenylene sulfide fiber (B) in nonwoven fabric and measurement of mol% of repeating unit

The surface of the nonwoven fabric sheet after the heating and pressurization treatment was imaged at a magnification of 150 times using a microinfrared spectrophotometer ("Cary 660" manufactured by Agilent Technologies, Inc.). Then, a portion where the shape of the fiber remains was manually selected and processed in the dynamic contour extraction processing mode. The processed image was subjected to infrared absorption spectrum measurement for each pixel. The polyphenylene sulfide fiber (A) and the copolymerized polyphenylene sulfide fiber (B) in the nonwoven fabric were distinguished from each other, based on the peak intensity derived from the C-H out-of-plane bending vibration of the para-substituted form of benzene, appearing in the vicinity of 810 $cm^{-1}$, and the presences thereof were confirmed. The mole% of each repeating unit of the polyphenylene sulfide fiber (A) and the copolymerized polyphenylene sulfide fiber (B) was calculated using a calibration curve obtained from each peak intensity of a standard sample known in mole%, from the peak intensity derived from the C-H out-of-plane bending of the para-substituted form of benzene in the vicinity of 810 $cm^{-1}$ or the peak intensity derived from the C-H out-of-plane bending of the meta-substituted form of benzene in the vicinity of 780 $cm^{-1}$ in the infrared absorption spectrum in each region obtained at a magnification of 150 times.

[Reference Example 1]

(Polyphenylene sulfide fiber (A))

Polyphenylene sulfide composed only of p-phenylene sulfide units was vacuum-dried at 150°C for 12 hours, and then melt-spun at a spinning temperature of 330°C. In the melt spinning, the polyphenylene sulfide was supplied to a spinning pack while melt-extruded by a twin screw extruder and weighed by a gear pump. Thereafter, the polyphenylene sulfide was discharged from a spinneret having 36 holes each with a hole diameter D of 0.23 mm and a land length L

of 0.3 mm, under the condition of a single-hole discharge rate of 0.5 g/min. The spinneret that was used had a straight hole as an introduction hole positioned directly above the spinneret holes, and had a tapered connection portion between the introduction hole and the spinneret holes. The polyphenylene sulfide discharged from the spinneret was made to pass a 50-mm warm region and then air-cooled over 1.0 m, using a uniflow cooling device, under the conditions of a temperature of 25°C and a wind speed of 18 m/min. Thereafter, an oil agent was imparted, and all the 36 filaments were wound up by a winder via a first godet roller and a second godet roller at 1,000 m/min to give an undrawn fiber.

The obtained undrawn fiber was taken up by a feed roller equipped with a nip roller, strained between the feed roller and a first roller, and then made to go around the first roller and a second roller heated respectively at 90°C and 100°C six times for performing heat drawing. Further, the drawn fiber was made to go around a third roller heated at 230°C six times and thus heat-set. The draw ratio was 3.85 times, and the fiber was taken up by a non-heating roller having a peripheral speed of 400 m/min after the third roller, and then a dispersant was imparted in an amount of 2 mass% based on the mass of the fiber by guide lubrication. Subsequently, crimps were formed with a number of crimps of 8 crimps/25 mm using a crimper, and then the fiber was heat-set at 70°C for 1 minute using a heat setter. Thereafter, the obtained fiber was cut with a cutter to obtain a cut fiber having an average fiber length of 6 mm. The content of the p-phenylene sulfide unit in the polyphenylene sulfide fiber (A) thus obtained was 100.0% even at mol% measured by a microinfrared spectrophotometer.

[Reference Example 2]

(Copolymerized polyphenylene sulfide fiber (B))

An undrawn fiber was obtained in the same manner as in Reference Example 1 except that copolymerized polyphenylene sulfide composed of 90 mol% of p-phenylene sulfide units and 10 mol% of m-phenylene sulfide units was used. The obtained undrawn fiber was taken up by a feed roller equipped with a nip roller, strained between the feed roller and a first roller, and then made to go around the first roller and a second roller heated respectively at 90°C and 100°C six times for performing heat drawing. Further, the drawn fiber was made to go around a third roller heated at 150°C six times and thus heat-set. The draw ratio was 3.85 times, and the fiber was taken up by a non-heating roller having a peripheral speed of 400 m/min after the third roller, and then a dispersant was imparted in an amount of 2 mass% based on the mass of the fiber by guide lubrication. Subsequently, crimps were formed with a number of crimps of 8 crimps/25 mm using a crimper, and then the fiber was heat-set at 70°C for 1 minute using a heat setter. Thereafter, the obtained fiber was cut with a cutter to obtain a cut fiber having an average fiber length of 6 mm. The content of the m-phenylene sulfide unit in the polyphenylene sulfide fiber (B) thus obtained was 10.0% even at mol% measured by a microinfrared spectrophotometer.

[Reference Example 3]

(Undrawn polyphenylene sulfide fiber)

An undrawn fiber was obtained in the same manner as in Reference Example 1. A dispersant in an amount of 2 mass% based on the mass of the fiber was imparted to the obtained undrawn fiber by guide lubrication. Subsequently, crimps were formed with a number of crimps of 8 crimps/25 mm using a crimper, and then the fiber was heat-set at 70°C for 1 minute using a heat setter. Thereafter, the obtained fiber was cut with a cutter to obtain a cut fiber having an average fiber length of 6 mm. The content of the p-phenylene sulfide unit in the undrawn polyphenylene sulfide fiber thus obtained was 100.0% even at mol% measured by a microinfrared spectrophotometer.

[Reference Example 4]

(Undrawn polyphenylene sulfide fiber having low mol% of p-phenylene sulfide unit)

An undrawn fiber was obtained in the same manner as in Reference Example 1 except that polyphenylene sulfide containing 96 mol% of p-phenylene sulfide units was used. A dispersant in an amount of 2 mass% based on the mass of the fiber was imparted to the obtained undrawn fiber by guide lubrication. Subsequently, crimps were formed with a number of crimps of 8 crimps/25 mm using a crimper, and then the fiber was heat-set at 70°C for 1 minute using a heat setter. Thereafter, the obtained fiber was cut with a cutter to obtain a cut fiber having an average fiber length of 6 mm. The content of the p-phenylene sulfide unit in the undrawn polyphenylene sulfide fiber thus obtained was 96.0% even at mol% measured by a microinfrared spectrophotometer.

[Reference Example 5]

(Undrawn copolymerized polyphenylene sulfide fiber)

An undrawn fiber was obtained in the same manner as in Reference Example 2. A cut fiber of an undrawn copolymerized polyphenylene sulfide fiber was obtained by performing the same procedure as in Reference Example 3 on the obtained undrawn fiber.

[Example 1]

The cut fiber (40 mass%) of the polyphenylene sulfide fiber (A) obtained in Reference Example 1, the cut fiber (40 mass%) of the copolymerized polyphenylene sulfide fiber (B) obtained in Reference Example 2 at a copolymerization molar ratio of 10 mol%, and the cut fiber (20 mass%) of the undrawn polyphenylene sulfide fiber obtained in Reference Example 3 were dispersed in water to prepare a dispersion having a fiber concentration of 0.07 mass%. Wet paper was fabricated using this dispersion and a handmade paper machine. The web obtained by dewatering the wet paper using a roller was dried at 110°C for 70 seconds using a rotary dryer to obtain a dry web. Subsequently, one surface thereof was subjected to a heating and pressurization treatment at an iron roll surface temperature of 220°C, a linear pressure of 490 N/cm, and a roll rotating speed of 3 m/min, and then the other surface was heated and pressurized at an iron roll surface temperature of 220°C, a linear pressure of 490 N/cm, and a roll rotating speed of 3 m/min to obtain a nonwoven fabric. The evaluation results of the nonwoven fabric are shown in Table 1.

[Examples 2 to 7]

A nonwoven fabric was obtained in the same manner as in Example 1 except that the mass ratio of the polyphenylene sulfide fiber (A), the copolymerized polyphenylene sulfide fiber (B), and the undrawn polyphenylene sulfide fiber was changed. The evaluation results of the nonwoven fabric are shown in Table 1.

[Comparative Example 1]

A nonwoven fabric was obtained in the same manner as in Example 1 except that 50 mass% of the polyphenylene sulfide fiber (A) and 50 mass% of the copolymerized polyphenylene sulfide fiber (B) were used without using the undrawn polyphenylene sulfide fiber, even though breakage partially occurred in the drying step. The evaluation results of the nonwoven fabric are shown in Table 2.

[Comparative Example 2]

A nonwoven fabric was obtained in the same manner as in Example 1 except that 50 mass% of the polyphenylene sulfide fiber (A) and 50 mass% of the undrawn polyphenylene sulfide fiber were used without using the copolymerized polyphenylene sulfide fiber (B). The evaluation results of the nonwoven fabric are shown in Table 2.

[Comparative Example 3]

A nonwoven fabric was obtained in the same manner as in Example 1 except that 50 mass% of the copolymerized polyphenylene sulfide fiber (B) and 50 mass% of the undrawn polyphenylene sulfide fiber were used without using the polyphenylene sulfide fiber (A). The evaluation results of the nonwoven fabric are shown in Table 2.

[Comparative Example 4]

A nonwoven fabric was obtained in the same manner as in Example 1 except that only the undrawn polyphenylene sulfide fiber was used. The evaluation results of the nonwoven fabric are shown in Table 2.

[Examples 8 to 9, Comparative Examples 5 to 6]

A nonwoven fabric was obtained in the same manner as in Example 1 except that the melting point was changed by changing the copolymerization mol% of the copolymerized polyphenylene sulfide fiber (B). The evaluation results of the nonwoven fabric are shown in Table 3.

[Example 10]

A nonwoven fabric was obtained in the same manner as in Example 1 except that the undrawn polyphenylene sulfide fiber was changed to the undrawn polyphenylene sulfide fiber having a low mol% of p-phenylene sulfide units obtained in Reference Example 4. The evaluation results of the nonwoven fabric are shown in Table 3.

[Comparative Example 7]

A nonwoven fabric was obtained in the same manner as in Example 1 except that the undrawn polyphenylene sulfide fiber was changed to the undrawn copolymerized polyphenylene sulfide fiber obtained in Reference Example 5. The evaluation results of the nonwoven fabric are shown in Table 3.

[Table 1]

| Item | | | Example 1 | Example 2 | Example 3 | Example 4 | Example 5 | Example 6 | Example 7 |
|---|---|---|---|---|---|---|---|---|---|
| Constitution | Polyphenylene sulfide fiber (A) | mass% | 40 | 49 | 20 | 49 | 20 | 2 | 60 |
| | Copolymerized polyphenylene sulfide fiber (B) | mass% | 40 | 49 | 20 | 2 | 60 | 49 | 20 |
| | Undrawn polyphenylene sulfide fiber | mass% | 20 | 2 | 60 | 49 | 20 | 49 | 20 |
| | Undrawn copolymerized polyphenylene sulfide fiber | mass% | 0 | 0 | 0 | 0 | 0 | 0 | 0 |
| Copolymerized PPS fiber (B) | Melting point | °C | 252 | 252 | 252 | 252 | 252 | 252 | 252 |
| | Copolymerization mol% (m-component) | mol% | 10.0 | 10.0 | 10.0 | 10.0 | 10.0 | 10.0 | 10.0 |
| drying conditions after papermaking | Papermaking and drying temperature | °C | 110 | 110 | 110 | 110 | 110 | 110 | 110 |
| | Drying time | second | 70 | 70 | 70 | 70 | 70 | 70 | 70 |
| Calendering conditions | Speed | m/min | 3 | 3 | 3 | 3 | 3 | 3 | 3 |
| | Temperature | °C | 220 | 220 | 220 | 220 | 220 | 220 | 220 |
| | Linear pressure | N/cm | 490 | 490 | 490 | 490 | 490 | 490 | 490 |
| Nonwoven fabric physical properties | Melting point (Tm-L) | °C | 252 | 252 | 252 | 252 | 252 | 252 | 252 |
| | Area percentage of polyphenylene sulfide fused portion (C) | % | 25 | 4 | 65 | 52 | 25 | 52 | 25 |
| | mol% (p-component) of polyphenylene sulfide fused portion (C) | mol% | 100.0 | 100.0 | 100.0 | 100.0 | 100.0 | 100.0 | 100.0 |
| | Basis weight | $g/m^2$ | 10.0 | 10.0 | 10.0 | 10.0 | 10.0 | 10.0 | 10.0 |
| | Thickness | μm | 22.00 | 20.00 | 27.00 | 24.00 | 22.00 | 26.00 | 23.00 |
| | Tear strength (X) | N | 0.539 | 0.588 | 0.392 | 0.294 | 0.686 | 0.588 | 0.343 |
| | Tensile strength (Y) | N/15mm | 6.5 | 3.5 | 7.0 | 6.8 | 5.0 | 4.0 | 6.0 |
| | $\sqrt{XY}$ | - | 1.9 | 1.4 | 1.7 | 1.4 | 1.9 | 1.5 | 1.4 |
| | Air permeability | $cm^3/cm^2/s$ | 13 | 80 | 5 | 6 | 13 | 6 | 15 |

[Table 2]

| Item | | | Comparative Example 1 | Comparative Example 2 | Comparative Example 3 | Comparative Example 4 |
|---|---|---|---|---|---|---|
| Constitution | Polyphenylene sulfide fiber (A) | mass% | 50 | 50 | 0 | 0 |
| | Copolymerized polyphenylene sulfide fiber (B) | mass% | 50 | 0 | 50 | 0 |
| | Undrawn polyphenylene sulfide fiber | mass% | 0 | 50 | 50 | 100 |
| | Undrawn copolymerized polyphenylene sulfide fiber | mass% | 0 | 0 | 0 | 0 |
| Copolymerized PPS fiber (B) | Melting point | °C | 252 | - | 252 | - |
| | Copolymerization mol% (m-component) | mol% | 10.0 | - | 10.0 | - |
| drying conditions after papermaking | Papermaking and drying temperature | °C | 110 | 110 | 110 | 110 |
| | Drying time | second | 70 | 70 | 70 | 70 |
| Calendering conditions | Speed | m/min | 3 | 3 | 3 | 3 |
| | Temperature | °C | 220 | 220 | 220 | 220 |
| | Linear pressure | N/cm | 490 | 490 | 490 | 490 |
| Nonwoven fabric physical properties | Melting point (Tm-L) | °C | 252 | 283 | 252 | 283 |
| | Area percentage of polyphenylene sulfide fused portion (C) | % | 0 | 55 | 55 | 100 |
| | mol% (p-component) of polyphenylene sulfide fused portion (C) | mol% | - | 100.0 | 100.0 | 100.0 |
| | Basis weight | $g/m^2$ | 10.0 | 10.0 | 10.0 | 10.0 |
| | Thickness | μm | 19.00 | 25.00 | 24.00 | 24.00 |
| | Tear strength (X) | N | 0.588 | 0.098 | 0.569 | 0.039 |
| | Tensile strength (Y) | N/15mm | 2.0 | 6.7 | 2.3 | 3.0 |
| | $\sqrt{XY}$ | - | 1.1 | 0.8 | 1.1 | 0.3 |
| | Air permeability | $cm^3/cm^2/s$ | 100 | 6 | 6 | 3 |

[Table 3]

| Item | | | Example 8 | Example 9 | Example 10 | Comparative Example 5 | Comparative Example 6 | Comparative Example 7 |
|---|---|---|---|---|---|---|---|---|
| Constitution | Polyphenylene sulfide fiber (A) | mass% | 40 | 40 | 40 | 40 | 40 | 40 |
| | Copolymerized polyphenylene sulfide fiber (B) | mass% | 40 | 40 | 40 | 40 | 40 | 40 |
| | Undrawn polyphenylene sulfide fiber | mass% | 20 | 20 | 20 | 20 | 20 | 0 |
| | Undrawn copolymerized polyphenylene sulfide fiber | mass% | 0 | 0 | 0 | 0 | 0 | 20 |
| Copolymerized PPS fiber (B) | Melting point | °c | 265 | 245 | 252 | 275 | 230 | 252 |
| | Copolymerization mol% (m-component) | mol% | 5.0 | 20.0 | 10.0 | 3.0 | 30.0 | 10.0 |
| drying conditions after papermaking | Papermaking and drying temperature | °C | 110 | 110 | 110 | 110 | 110 | 110 |
| | Drying time | second | 70 | 70 | 70 | 70 | 70 | 70 |
| Calendering conditions | Speed | m/min | 3 | 3 | 3 | 3 | 3 | 3 |
| | Temperature | °c | 220 | 220 | 220 | 220 | 220 | 220 |
| | Linear pressure | N/cm | 490 | 490 | 490 | 490 | 490 | 490 |

(continued)

| Item | | | Example 8 | Example 9 | Example 10 | Comparative Example 5 | Comparative Example 6 | Comparative Example 7 |
|---|---|---|---|---|---|---|---|---|
| Nonwoven fabric physical properties | Melting point (Tm-L) | °c | 265 | 245 | 252 | 275 | 230 | 252 |
| | Area percentage of polyphenylene sulfide fused portion (C) | % | 25 | 25 | 25 | 25 | 25 | 0 |
| | mol% (p-component) of polyphenylene sulfide fused portion (C) | mol% | 100.0 | 100.0 | 96.0 | 100.0 | 100.0 | - |
| | Basis weight | $g/m^2$ | 10.0 | 10.0 | 10.0 | 10.0 | 10.0 | 10.0 |
| | Thickness | μm | 22.00 | 21.00 | 22.00 | 23.00 | 20.00 | 22.00 |
| | Tear strength (X) | N | 0.549 | 0.490 | 0.520 | 0.186 | 0.177 | 0.520 |
| | Tensile strength (Y) | N/15mm | 6.0 | 6.7 | 6.1 | 5.5 | 6.5 | 2.3 |
| | $\sqrt{XY}$ | - | 1.8 | 1.8 | 1.8 | 1.0 | 1.1 | 1.1 |
| | Air permeability | $cm^3/cm^2/s$ | 13 | 13 | 13 | 13 | 13 | 10 |

The polyphenylene sulfide fiber nonwoven fabrics obtained in Examples 1 to 10 contained the polyphenylene sulfide fiber (A) and the copolymerized polyphenylene sulfide fiber (B), had the polyphenylene sulfide fused portion (C), and thus could attain high tear strength and tensile strength.

On the other hand, the polyphenylene sulfide fiber nonwoven fabric obtained in Comparative Example 1 did not have the polyphenylene sulfide fused portion (C), and had high tear strength, but could not attain sufficient tensile strength.

The polyphenylene sulfide fiber nonwoven fabric obtained in Comparative Example 2 did not contain the copolymerized polyphenylene sulfide fiber (B), and exhibited high tensile strength, but could not attain sufficient tear strength.

The polyphenylene sulfide fiber nonwoven fabric obtained in Comparative Example 3 did not contain the polyphenylene sulfide fiber (A) and had high tear strength, but could not attain sufficient tensile strength.

The polyphenylene sulfide fiber nonwoven fabric obtained in Comparative Example 4 did not contain the polyphenylene sulfide fiber (A) and the copolymerized polyphenylene sulfide fiber (B), but exhibited insufficient tear strength. In addition, the polyphenylene sulfide fiber nonwoven fabric obtained in Comparative Example 4 had low tensile strength as compared with that of Comparative Example 2 having low tear strength similarly to Comparative Example 4.

The polyphenylene sulfide fiber nonwoven fabric obtained in Comparative Example 5 had a low copolymerization molar ratio, contained a copolymerized polyphenylene sulfide fiber (B) having a high melting point, had a high melting point (Tm-L), and exhibited high tensile strength, but could not attain sufficient tear strength.

The polyphenylene sulfide fiber nonwoven fabric obtained in Comparative Example 6 had a high copolymerization molar ratio, contained a copolymerized polyphenylene sulfide fiber (B) having a low melting point, had a low melting point (Tm-L), and exhibited high tensile strength, but could not attain sufficient tear strength.

The polyphenylene sulfide fiber nonwoven fabric obtained in Comparative Example 7 did not have the undrawn polyphenylene sulfide fiber forming the polyphenylene sulfide fused portion (C), and had high tear strength, but could not attain sufficient tensile strength.

## Claims

**1.** A polyphenylene sulfide fiber nonwoven fabric comprising:

a polyphenylene sulfide fiber (A);
a copolymerized polyphenylene sulfide fiber (B); and
a polyphenylene sulfide fused portion (C),
wherein a melting point (Tm-L) of the polyphenylene sulfide fiber nonwoven fabric is 240 to 270°C, the melting point (Tm-L) being defined as a top of a peak observed at a lowest temperature side among melting endothermic peaks obtained by raising a temperature of the polyphenylene sulfide fiber nonwoven fabric from 50°C at a rate of 16°C/min in a nitrogen atmosphere using a differential scanning calorimeter (DSC).

**2.** The polyphenylene sulfide fiber nonwoven fabric according to claim 1, wherein the copolymerized polyphenylene sulfide fiber (B) is a copolymerized polyphenylene sulfide fiber containing repeating units of a p-phenylene sulfide unit and an m-phenylene sulfide unit.

**3.** The polyphenylene sulfide fiber nonwoven fabric according to claim 1 or 2, wherein an area percentage of the polyphenylene sulfide fused portion (C) is 5 to 50%.

**4.** The polyphenylene sulfide fiber nonwoven fabric according to any one of claims 1 to 3, having a tear strength of 0.200 to 10.0 N.

**5.** The polyphenylene sulfide fiber nonwoven fabric according to any one of claims 1 to 4, wherein the copolymerized polyphenylene sulfide fiber (B) contains 4.0 to 40.0 mol% of a copolymerization unit in p-phenylene sulfide.

**6.** The polyphenylene sulfide fiber nonwoven fabric according to any one of claims 1 to 5, wherein mol% of the p-phenylene sulfide unit in the polyphenylene sulfide fused portion (C) is 97.0 mol% or more.

**7.** A diaphragm comprising the polyphenylene sulfide fiber nonwoven fabric according to any one of claims 1 to 6.

## INTERNATIONAL SEARCH REPORT

International application No.
**PCT/JP2022/006161**

### A. CLASSIFICATION OF SUBJECT MATTER

***D21H 13/20***(2006.01)i; ***D01F 6/76***(2006.01)i; ***D04H 1/4326***(2012.01)i; ***D21H 27/00***(2006.01)i
FI: D21H13/20; D01F6/76 D; D04H1/4326; D21H27/00 Z

According to International Patent Classification (IPC) or to both national classification and IPC

### B. FIELDS SEARCHED

Minimum documentation searched (classification system followed by classification symbols)

D21B1/00-D21J7/00; D04H1/00-18/04; D01F6/76

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | WO 2020/066815 A1 (TORAY INDUSTRIES, INC) 02 April 2020 (2020-04-02)<br>claims, examples, table 1, paragraphs [0048], [0074] | 1-5, 7<br>6 |
| A | JP 61-289162 A (JAPAN VILENE CO LTD) 19 December 1986 (1986-12-19)<br>claims 1-2 | 1-7 |
| A | JP 2011-106043 A (TOMOEGAWA PAPER CO LTD) 02 June 2011 (2011-06-02)<br>claim 1 | 1-7 |
| A | JP 2010-106408 A (ASAHI KASEI FIBERS CORP) 13 May 2010 (2010-05-13)<br>claim 1 | 1-7 |
| A | JP 2002-105834 A (TORAY INDUSTRIES, INC) 10 April 2002 (2002-04-10)<br>claim 1 | 1-7 |

☐ Further documents are listed in the continuation of Box C.    ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 April 2022** | **26 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (January 2015)

**INTERNATIONAL SEARCH REPORT**
**Information on patent family members**

International application No.
**PCT/JP2022/006161**

| Patent document cited in search report | Publication date (day/month/year) | Patent family member(s) | Publication date (day/month/year) |
|---|---|---|---|
| WO 2020/066815 A1 | 02 April 2020 | CN 112714808 A<br>KR 10-2021-0060458 A<br>TW 202024411 A | |
| JP 61-289162 A | 19 December 1986 | (Family: none) | |
| JP 2011-106043 A | 02 June 2011 | (Family: none) | |
| JP 2010-106408 A | 13 May 2010 | (Family: none) | |
| JP 2002-105834 A | 10 April 2002 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003077494 A
- JP 2005146428 A
- WO 2020066815 A